# EUROPÄISCHE PATENTSCHRIFT

(11) **EP 0 422 145 B1**
(45) Veröffentlichungstag und Bekanntmachung des Hinweises auf die Patenterteilung: **07.09.1994**
(21) Anmeldenummer: 90904621.1
(22) Anmeldetag: 14.03.1990
(51) Int. Cl.: G01N 33/18, G01N 13/02

(54) **VORRICHTUNG ZUR MESSUNG AUFSCHWIMMENDER STOFFE IN GEWÄSSERN**
DEVICE FOR DETERMINING THE PRESENCE OF SUBSTANCES FLOATING ON WATER
DISPOSITIF DE MESURE DE SUBSTANCES FLOTTANT SUR LES EAUX

(30) Priorität: 22.03.1989 DE 3909342
(43) Veröffentlichungstag der Anmeldung: 17.04.1991
(73) Patentinhaber: KLESPER, Helmut, D-41462 Neuss (DE); TEN HOMPEL, Michael, 44227 Dortmund (DE)
(72) Erfinder: TEN HOMPEL, Michael, D-4600 Dortmund 50 (DE)
(74) Vertreter: Patentanwälte Meinke, Dabringhaus und Partner
(86) Internationale Anmeldenummer: EP9000413
(87) Internationale Veröffentlichungsnummer: WO9011517

(56) Entgegenhaltungen:
- DE-A- 2 836 972
- US-A- 4 512 183

## Beschreibung

Die Erfindung betrifft eine Vorrichtung zur Messung aufschwimmender gegenüber Wasser höher viskoser Stoffe in Gewässern, insbesondere zur Messung von Verunreinigungen auf der Wasseroberfläche mit einer Schwingeinrichtung zur Erregung der Wasseroberfläche, einer Einrichtung zur Messung der sich an der Wasseroberfläche ausbildenden Oberflächenwellen sowie mit einer elektronischen Auswerteinrichtung.

Derartige Vorrichtungen dienen insbesondere zur Feststellung von Gewässerverschmutzungen an der Oberfläche, wie Ölfilmen, z.B. in Vorflutern, Regenrückhaltebecken usw. So sind zur Bestimmung von Ölfilmen kontinuierliche optische Verfahren bekannt (US-A- 4 512 183), bei denen eine Lichtquelle auf die Wasseroberfläche strahlt und das von der Wasseroberfläche reflektierte Licht in entsprechenden optischen Meßeinrichtungen, wie Fotodioden oder Fernsehkameras, gemessen wird. Tritt in der bestrahlten Wasseroberfläche nun eine Verunreinigung, z.B. durch Öl, auf, so ändert sich die Zuammensetzung des reflektierten Lichtes und es wird dann von der Meßeinrichtung ein Alarm ausgelöst. Diese Meßverfahren arbeiten zwar relativ zuverlässig aufgrund der komplizierten optischen Einrichtungen sind sie aber sehr aufwendig und damit kostenintensiv.

Aus der DE-A-28 36 972 ist ein berührungsloses Wellenamplituden-Meßverfahren bekannt, wobei, anders als beim oben beschriebenen optischen Verfahren, hier niederfrequent modulierter Ultraschall eingesetzt wird.

Ferner sind diskontinuierliche Meßverfahren bekannt, bei denen von Zeit zu Zeit mechanisch Proben entnommen werden, deren optische Eigenschaften durch Messung des Reflektions- oder Absorptionsverhaltens oder deren elektrische Eigenschaften durch Bestimmung der Dielektrizität der Wasseroberfläche bestimmt werden. Nachteilig bei diesen Verfahren ist, daß eine aufwendige Mechanik zur automatischen Durchführung der Probenentnahme notwendig ist, was mit entsprechend hohem Wartungsaufwand und hoher Ausfallwahrscheinlichkeit verbunden ist. Außerdem sind deratige diskontinuierliche Verfahren zur Überwachung von fließenden Gewässern ungeeignet.

Aufgabe der Erfindung ist deshalb die Schaffung einer Lösung, mit welcher mit einfachen Mitteln eine zuverlässige Überwachung der Wasseroberfläche von stehenden und fließenden Gewässern möglich ist.

Diese Aufgabe wird mit einer Vorrichtung der eingangs bezeichneten Art erfindungsgemäß dadurch gelöst, daß die Schwingeinrichtung und die Oberflächenwellen-Meßeinrichtung an oder unter der Wasseroberfläche schwimmend angeordnet sind.

Mit einer derartigen Vorrichtung ist auf einfache Weise eine Überwachung der Wasseroberfläche von stehenden und fließenden Gewässern möglich, ohne daß dazu kommplizierte optische Einrichtungen od. dgl. notwendig sind. Durch die Anregung des Wassers unter der Wasseroberfläche entstehen nämlich an der Wasseroberfläche charakteristische Oberflächenwellen, die von einer Meßeinrichtung entsprechend gemessen werden. Befindet sich nun an der Wasseroberfläche ein Stoff hoher Viskosität, wie Öl, so werden die Oberflächenwellen gedämpft, was von der Meßeinrichtung festgestellt und in ein entsprechendes Warnsignal od. dgl. umgesetzt wird.

Bei sich veränderndem Wasserspiegel ist nach der Erfindung auch gewährleistet, daß die Schwingeinrichtung und die Oberflächenwellen-Meßeinrichtung jeweils in gleicher Position zur Wasseroberfläche verbleiben.

Dabei ist es ganz besonders vorteilhaft, wenn die Schwingeinrichtung und die Oberflächenwellen-Meßeinrichtung an gemeinsamen Schwimmern angeordnet sind. Dadurch ist nämlich gewährleistet, daß auch bei unruhiger Wasseroberfläche die Schwingeinrichtung und die Meßeinrichtung zueinander jeweils in der gleichen Position verbleiben, so daß durch eine natürliche Bewegung der Wasseroberfläche keine Verfälschung der Messungen auftritt.

Die Erfindung sieht ferner vor, daß die Schwingeinrichtung als wasserdichter Lautsprecher ausgebildet ist. Selbstverständlich können aber auch andere schwingfähige, insbesondere mechanische Systeme eingesetzt werden.

Vorteilhaft sieht die Erfindung vor, daß natürliche Bewegungen der Wasseroberfläche bei der Oberflächenwellen-Messung mechanisch und/oder elektronisch gedämpft werden. Eine solche Dämpfung ist irsbesondere dann vorgesehen, wenn besonders bewegte Gewässes überwacht werden sollen.

Die Oberflächenwellen-Meßeinrichtung kann von mit Strom beaufschlagten Elektroden gebildet sein, die im Bereich oberhalb der Schwingeinrichtung unter die Wasseroberfläche eintauchend angeordnet sind. Es können aber auch andere dynamisch arbeitende Wegmesser, wie Ultraschallsensoren oder Laserinterferometer, eingesetzt werdsn.

Bei Einsatz von Elektroden als Oberflächenwellenmeßeinrichtung ist vorteilhaft vorgesehen, daß die Elektroden mit Wechselstrom beaufschlagbar sind und über einen Gleichrichter oder elektrische Filter an eine Auswerteeinrichtung angeschlossen sind. Durch die Beaufschlagung mit Wechselstrom wird eine Elektrolyse an den Elektrodendrähten weitgehend vermieden, das aufgenommene Meßsignal wird durch die nachgeschalteten elektronischen Einrichtungen von Störeinflussen befreit und entsprechend der Auswerteeinrichtung zugeführt, welche bei Auftreten von Verunreinigungen an der Wasseroberfläche eine Störmeldung oder dgl. abgibt.

Die Erfindung ist nachstehend anhand der Zeichnung beispielsweise näher erläutert. Diese zeigt in:
- Fig. 1: in schematischer Darstellung eine Vorrichtung zur Durchführung des erfindungsgemäßen Verfahrens,
- Fig. 2: die Vorrichtung nach Fig. 1 mit Auswerteschaltung,
- Fig. 3: ein Spannungs-Zeit-Diagramm für reines Wasser und
- Fig. 4: ein Spannungs-Zeit-Diagramm für mit Öl verunreinigtes Wasser.

In der Zeichnung ist nur beispielhaft ein mit Wasser 1 gefüllter Behälter 2 dargestellt, wobei die Wasseroberfläche mit 3 bezeichnet ist. Der Behälter 2 kann beispielsweise einen Vorfluter, ein Regenrückhaltebecken, aber auch ein Flußbett oder dgl. darstellen, d.h. bei dem im Behälter befindlichen Wasser 1 kann as sich um ein stehendes oder fließendes Gewässer handeln.

Eine als wasserdichter Unterwasserlautsprecher 4 ausgebildete Schwingeinrichtung ist mittels Befestigungselementen 5 an zwei auf der Wasseroberfläche 3 schwimmenden Schwimmern 6 derart befestigt, daß diese unterhalb der Wasseroberfläche 3 angeordnet ist. Weiterhin sind zwei als Oberflächenwellenmeßeinrichtung dienende Platinelektroden 7 vorgesehen, die mittels weiterer Befestigungselemente 8 ebenfalls an den Schwimmern 6 angeordnet sind und im Bereich oberhalb der Schwingeinrichtung 4 unter die Wasseroberfläche 3 eintauchen.

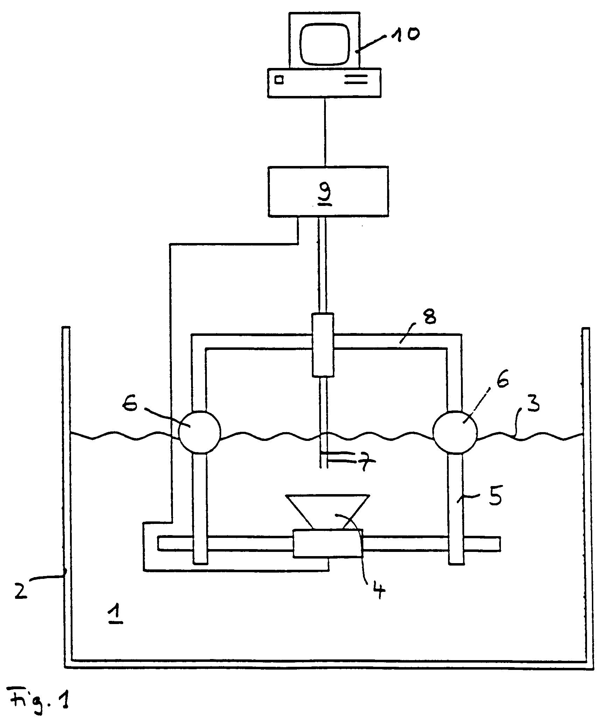

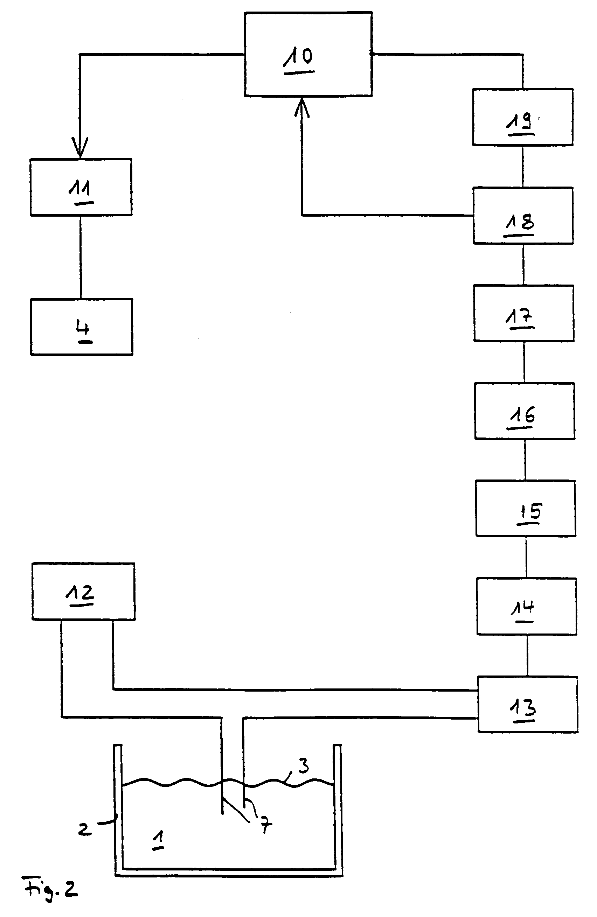

Der Unterwasserlautsprecher 4 sowie die Elektroden 7 sind an eine elektronische Einrichtung 9 mit zugeordneter Auswerteeinrichtung 10 angeschlossen, deren prinzipieller Aufbau in Fig. 2 dargestellt ist.

Der Lautsprecher 4, dessen Membran parallel zur Wasseroberfläche 3 angeordnet ist, wird kontinuierlich mit einer gleichbleibenden Frequenz und Leistung von einer elektrischen Energiequelle 11 der elektrischen Einrichtung 9 mit elektrischer Energie versorgt, so daß die Membran des Lautsprechers 4 kontinuierlich zum Schwingen angeregt wird. Die ausgesandten Schallwellen breiten sich entsprechend in Richtung der Wasseroberfläche 3 aus, wo sie auf der Wasseroberfläche 3 Oberflächenwellen erzeugen. Aufgrund dieser Oberflächenwellenbildung tauchen die Platinelektroden 7 in Abhängigkeit von der Zeit unterschiedlich tief in das Wasser ein, wodurch sich der elektrische Widerstand zwischen den Elektroden 7 entsprechend proportional verändert. Zur Nessung dieses Widerstandes wird eine Wechselspannungsquelle 12 verwendet, wodurch weitgehend vermieden wird, daß eine ungewünschte Elektrolyse an den Elektroden stattfindet.

Die der Oberflächenwellenbewegung proportionale Wechselspannung wird von einem Transformator 13 aufgenommen und in einem Gleichrichter 14 gleichgerichtet, um die Wechselfrequenz der Wechselspannungsquelle 12 zu unterdrücken. Das gleichgerichtete Signal 14 wird in einem Verstärker 15 verstärkt und in einem Elektrischen Filtersystem 16, 17, 18 (Tief- und Hochpässe) derart gefiltert, daß es von sämtlichen Störungen befreit ist.

Die von der elektronischen Einrichtung 9 aufbereiteten Signale werden über einen A/D-Wandler 19 in die Auswerteeinrichtung 10, insbesondere Rechner, Eingelesen und entsprechend verarbeitet.

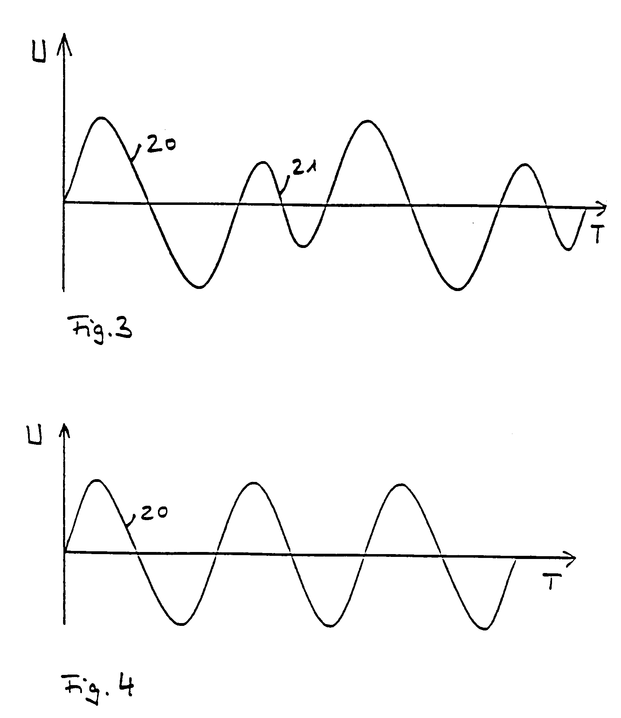

Fig. 3 zeigt ein typisches Ausgangssignal für reines Wasser, das im wesentlichen aus einer Grundwelle 20 und einer Welle 21 mit halber Frequenz besteht.

Tritt nun ein hochviskoser Stoff, wie Öl, an der betreffenden Wasseroberfläche auf, so wird die Oberflächenwellenbewegung stark gedämpft, was zu einem anderen Ausgangssignal führt, das in Fig. 4 dargestellt ist und deutlich von dem im Fig. 3 dargestellten Signal abweicht. Insbesondere läßt sich erkennen, daß die Welle 21 mit halber Frequenz vollständig gedämpft wird. Wird eine derartige Störung durch die Auswerteeinrichtung 10 festgestellt, werden automatisch entsprechende Warneinrichtungen oder dgl. betätigt.

Bewegungen der Schwimmer 6 durch äußere Wasserwellen werden sowohl durch das elektrische Filtersystem 16, 17, 18 als auch durch innere Filter der Auswerteeinrichtung 10 gedämpft, so daß sie keine praktische Bedeutung haben.

Natürlich ist die Erfindung nicht auf die in der Zeichnung dargestellten Ausführungsbeispiele beschränkt, weitere Ausgestaltungen sind mögilch, ohne den Grundgedanken zu verlassen. So können als Schwingeinrichtung auch andere schwingfähige Systeme und als Oberflächenwellenmeßeinrichtung auch andere dynamisch arbeitende Wegmesser, wie Ultraschallsensoren oder Laserinterferometer verwendet werden.

## Patentansprüche

1. Vorrichtung zur Messung aufschwimmender, gegenüber Wasser höher viskoser Stoffe in Gewässern, insbesondere zur Messung von Verunreinigungen auf der Wasseroberfläche, enthaltend eine Schwingeinrichtung zur Erregung der Wasseroberfläche, eine Einrichtung zur Messung der sich an der Wasseroberfläche ausbildenden Oberflächenwellen sowie eine elektronische Auswerteinrichtung (9,10),
dadurch gekennzeichnet,
daß die Schwingeinrichtung (4) und die Oberflächenwellen-Meßeinrichtung (7) an oder unter der Wasseroberfläche (3) schwimmend angeordnet sind.

2. Vorrichtung nach Anspruch 1,
dadurch gekennzeichnet,
daß die Schwingeinrichtung (4) und die Oberflächenwellen-Meßeinrichtung (7) an gemeinsamen Schwimmern (6) angeordnet sind.

3. Vorrichtung nach Anspruch 1 oder 2,
dadurch gekennzeichnet,
daß die Schwingeinichtung (4) als wasserdichter Lautsprecher ausgebildet ist.

4. Vorrichtung nach einem der vorangehenden Ansprüche,
gekennzeichnet durch
eine mechanische und/oder elektronische Dämpfungseinrichtung für die natürliche Bewegung der Wasseroberfläche bei der Oberflächenwellen-Messung.

5. Vorrichtung nach Anspruch 1 oder einem der folgenden,
dadurch gekennzeichnet,
daß die Oberflächenwellen-Meßeinrichtung (7) von mit Strom beaufschlagten Elektroden gebildet ist, die im Bereich oberhalb der Schwingeinrichtung (4) unter die Wasseroberfläche (3) eintauchend angeordnet sind.

6. Vorrichtung nach einem der vorangehenden Ansprüche,
dadurch gekennzeichnet,
daß die Elektroden (7) mit Wechselstrom beaufschlagbar sind und über einen Gleichrichter (14) und elektrische Filter (16,17,18) an eine Auswerteeinrichtung (10) angeschlossen sind.

## Claims

1. Apparatus for measuring floating substances in bodies of water, which substances are of higher viscosity than water, in particular for measuring impurities on the surface of water, including a vibrating device for exciting the surface of the water, a device for measuring the surface waves which are formed at the surface of the water, and an electronic evaluation device (9, 10), characterised in that the vibrating device (4) and the surface wave measuring device (7) are arranged floatingly at or under the surface (3) of the water.

2. Apparatus according to claim 1 characterised in that the vibrating device (4) and the surface wave measuring device (7) are arranged on common floats (6).

3. Apparatus according to claim 1 or claim 2 characterised in that the vibrating device (4) is in the form of a water-tight loudspeaker.

4. Apparatus according to one of the preceding claims characterised by a mechanical and/or electronic damping device for the natural movement of the surface of the water in the surface wave measurement operation.

5. Apparatus according to claim 1 or one of the following claims characterised in that the surface wave measuring device (7) is formed by electrodes which are acted upon by current and which are arranged to dip beneath the surface (3) of the water in the region above the vibrating device (4).

6. Apparatus according to one of the preceding claims characterised in that the electrodes (7) can be acted upon with alternating current and are connected to an evaluation device (10) by way of a rectifier (14) and electrical filters (16, 17, 18).

## Revendications

1. Dispositif pour la mesure de substances plus visqueuses que l'eau flottant sur l'eau, notamment pour la mesure d'impuretés à la surface de l'eau, comportant un système vibrant pour l'amorçage d'oscillations à la surface de l'eau, un équipement pour la mesure des ondes de surface se formant à la surface de l'eau ainsi qu'un système d'exploitation électronique des données (9, 10), caractérisé en ce que le système vibrant (4) et l'équipement de mesure des ondes de surface (7) sont disposés, en position flottante, à ou sous la surface de l'eau (3).

2. Dispositif selon la revendication 1, caractérisé en ce que le système vibrant (4) et l'équipement de mesure des ondes de surface (7) sont disposés sur des flotteurs communs (6).

3. Procédé selon la revendication 1 ou 2, caractérisé en ce que le système vibrant (4) est conçu sous forme de haut-parleur étanche à l'eau.

4. Procédé selon l'une des revendications précédentes, caractérisé par un système d'amortissement mécanique et/ou électronique pour le mouvement-naturel de la surface de l'eau lors de la mesure des ondes de surface.

5. Procédé selon la revendication 1 ou l'une des suivantes, caractérisé en ce que l'équipement de mesure des ondes de surface (7) est constitué d'électrodes alimentées en courant qui, dans la zone au-dessus du système vibrant (4), sont disposées, en position immergée, sous la surface de l'eau (3).

6. Dispositif selon l'une des revendications précédentes, caractérisé en ce que les électrodes (7) peuvent être alimentées en courant alternatif et sont raccordées, par l'intermédiaire d'un redresseur (14) et de filtres électriques (16, 17, 18), à un système d'exploitation des données (10).
